(19) Europäisches Patentamt

European Patent Office

Office européen des brevets

(11) **EP 1 659 566 A2**

(12) **EUROPEAN PATENT APPLICATION**

(43) Date of publication:
**24.05.2006 Bulletin 2006/21**

(51) Int Cl.:
***G09G 5/06*** *(2006.01)*

(21) Application number: **05025257.6**

(22) Date of filing: **18.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **23.11.2004 KR 2004096264**

(71) Applicant: **Samsung Electronics Co., Ltd.**
**Suwon-si, Gyeonggi-Do (KR)**

(72) Inventors:
• **Park, Jung-Hoon**
**Suwon-si**
**Gyeonggi-do (KR)**
• **Jang, Seock-Woo**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method of displaying a color image and a mobile terminal using the same**

(57) A method of displaying a color image and a mobile terminal using the same are provided. Color image information is displayed using a YUV-based mapping table based on a human color perception characteristic, such that the color image can be represented with a minimum amount of data.

FIG.5

EP 1 659 566 A2

**Description**

**PRIORITY**

This application claims the benefit under 35 U.S.C. § 119(a) of an application entitled "Mobile Terminal With Improved color Image Displaying Apparatus and Method" filed in the Korean Intellectual Property Office on November 23, 2004 and assigned Serial No. 2004-96264, the entire contents of which are hereby incorporated by reference.

**BACKGROUND OF THE INVENTION**

Field of the Invention:

The present invention relates to a method of displaying a color image and a mobile terminal using the same. More particularly, the present invention relates to a method of displaying a color image and a mobile terminal using the same, in which a color image information is displayed using a YUV-based mapping table based on a human's color perception characteristic, such that the color image can be represented with minimum data.

Background of the Prior Art:

The terms "color image data", "color image information" and "color information" will be used interchangeably. Also, the terms "color" and "color tone" will also be used interchangeably.

Mobile communication systems have been developed to provide various services, including a short messaging service, a multimedia messaging service, and a data service such as a mobile banking service, as well as a voice call service. Accordingly, mobile terminal users have more opportunities to see various images on displays of the mobile terminals.

An image may be distorted on the display because of differences between the resolution of the display and the color information of an original image. That is, because the display of the mobile terminal has a limitation in its ability to perform color reproduction, it cannot accurately display the color information of the original image.

For this reason, there has been a demand for a method of compensating for the difference between a color region of an original image and a resolution of a display.

Because different mobile terminals have different resolutions depending on their displays, the mobile terminals use a mapping table to map color information of an original image on their displays, such that a natural image can be displayed. This mapping table will be referred to as a Gamut mapping table.

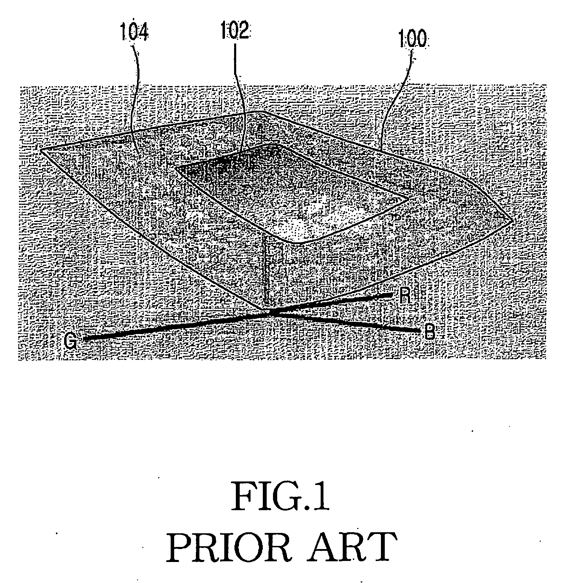

The case that the color information of the original image is not accurately displayed due the color reproduction limitations of the display will now be described with reference to FIG 1.

FIG 1 is a view of color reproduction ranges in a display of a mobile terminal and a large-sized display of a general device such as a TV or computer.

In FIG 1, a reference numeral 100 represents a color reproduction range in a display of a mobile terminal and a reference numeral 102 represents a color reproduction range in a large-sized display of a general device. A reference numeral 104 represents a color range that cannot be reproduced by the display of the mobile terminal. Also, reference characters R, G and B represent red, green and blue, which are three primary lights or colors, respectively.

The large-sized display of a conventional device can reproduce almost all colors using R, G and B. However, as shown in FIG 1, the display of the mobile terminal has a small-sized display such that it cannot reproduce all colors because of limitations in a human's color perception.

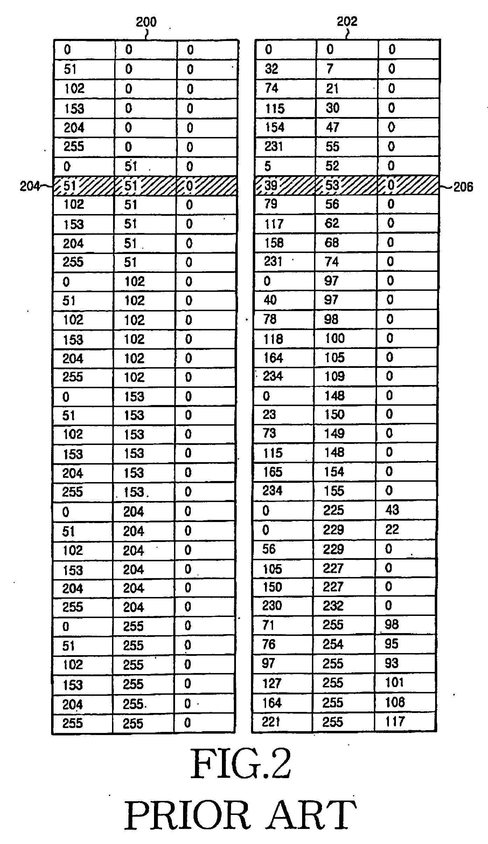

Therefore, the mobile terminal performs the Gamut mapping in order to naturally reproduce the color information of a region indicated by a reference numeral 104 on the display of the mobile terminal. The Gamut mapping is a method of compensating for a difference between color information of an original image and the resolution of the display of the mobile terminal. An example of the Gamut mapping will now be described with reference to FIG 2.

FIG 2 is an exemplary view illustrating transformation of an original image using a Gamut mapping table. A reference numeral 200 represents R, G and B values of original image data and a reference numeral 202 represents a 1:1 mapping of the original image data based on resolution of the display of the mobile terminal. For example, an original image data of R:51, G:51 and B:0 which is indicated by a reference numeral 204 is mapped into R:39, G:53 and B:0 which is indicated by a reference numeral 206 on the display of the mobile terminal. The Gamut mapping shown in FIG 2 is merely exemplary and it can be applied differently depending on the resolution of the display.

Because of the rapid development in display technologies, the mobile terminal is usually equipped with a Quarter Video Graphics Array (QVGA, 320×240 pixels) display. Also, small-sized displays with a resolution of 260000 colors or more are widely used.

However, in the case of the conventional Gamut mapping, the mobile terminal with the 260000-color QVGA display also requires a large amount of data. A description about that will be made below.

A size of a Gamut mapping table required when one RGB component is mapped into another RGB component can be obtained using Equation 1 below. Here, it is assumed that each RGB component is expressed with 8 bits which equals 256 cases.

$$\text{Size of Table}=8\text{bit}\times 8\text{bit}\times 8\text{bit}=2^{8}\times 2^{8}\times 2^{8}=256\times 256\times 256 \qquad \text{Equation 1}$$

That is, the number of cases is equal to $256^3$ about 16 million. In order to express those values, the mapping table requires 16 million, which equals 16 M in size.

Meanwhile, when each RGB component is expressed with 6 bits which equals 64 cases, the resolution is $64^3$ which equals 24 M colors.

Because the display of the mobile terminal is small and does not require a resolution as large as that of a monitor, the 260000-color display may be sufficient for the mobile terminal.

However, the launch of satellite digital media broadcasting (DMB) will demand greater resolution. Accordingly, the size of the mapping table also becomes larger. Consequently, a large portion of memory is required to store the mapping table data, resulting in deficiency of memory.

Therefore, there is a demand for an apparatus and method of reducing the size of the mapping table, in which the original image data can be mapped 1:1 according to the resolution of the display.

## SUMMARY OF THE INVENTION

The present invention provides an exemplary method of displaying a color image and a mobile terminal using the same.

Also, an exemplary aspect of the present invention provides a method of displaying a color image and a mobile terminal using the same, in which a small-sized mapping table is used to display an original color image based on human color perception characteristics.

Further, an exemplary aspect of the present invention provides a method of displaying a color image and a mobile terminal, in which the mobile terminal comprises a color sensor for considering color information of surroundings and a small-sized mapping table for displaying an original color image based on human color perception characteristics.

According to an exemplary aspect of the present invention, a mobile terminal comprises a memory for storing a Gamut mapping table that predetermines a ratio of R, G and B components of an original color image based on a color perception characteristic that humans are more sensitive to the G component among the R, G and B components, a controller for mapping the original color image into corresponding R, G and B components of the Gamut mapping table, and for combining the mapped R, G and B components, and a display for displaying the combined R, G and B components.

According to another exemplary aspect of the present invention, a mobile terminal comprises a color sensor for measuring color information of surroundings and a quantity of light; a memory for storing a Gamut mapping table and a color sensor mapping table, the Gamut mapping table being configured to predetermine a ratio of R, G and B components of an original color image based on a color perception characteristic that humans are more sensitive to the G component among the R, G and B components, the color sensor mapping table being configured to predetermine a ratio of R, G and B components of the Gamut mapped information according to the color information of the surroundings and the information on the quantity of light output from the color sensor, considering the human color perception characteristic. The mobile terminal further comprises a controller for mapping the original color image into corresponding R, G and B components of the Gamut mapping table, and for mapping the mapped R, G and B components into R, G and B components corresponding to the color sensor mapping table, and for combining the respective mapped R, G and B components, and a display for displaying the combined R, G and B components.

According to a another exemplary aspect of the present invention, a method of displaying a color image in a mobile terminal comprises the steps of setting a Gamut mapping table that predetermines a ratio of R, G and B components of an original color image, considering a color perception characteristic that humans are more sensitive to the G component among the R, G and B components; mapping the original color image into corresponding R, G and B components of the Gamut mapping table, and combining the mapped R, G and B components; and displaying the combined R, G and B components.

According to still another exemplary aspect of the present invention, a method of displaying a color image in a mobile terminal comprises the steps of measuring color information of surroundings and a quantity of light, setting a Gamut mapping table that predetermines a ratio of R, G and B components of an original color image by considering a color perception characteristic that human are more sensitive to the G component among the R, G and B components, setting a color sensor mapping table that predetermines a ratio of R, G and B components of the Gamut mapped information according to the color information of the surroundings and the information on the quantity of light output from the color sensor, considering the human's color perception characteristic, mapping the original color image into corresponding R, G and B components of the Gamut mapping table, mapping the mapped R, G and B components into corresponding R, G and B components of the color sensor mapping table, and combining the respective mapped R, G and B components, and displaying the combined R, G and B components.

**BRIEF DESCRIPTION OF THE DRAWINGS**

The accompanying drawings, which are included to provide a further understanding of the invention and are incorporated in and constitute a part of this application, illustrate exemplary embodiment(s) of the invention and together with the description serve to explain the principle of the invention. In the drawings:

FIG 1 is a view of color reproduction ranges in a display of a conventional mobile terminal and a large-sized display of a general device;

FIG 2 is an exemplary view illustrating transformation of an original image using a conventional Gamut mapping table;

FIG 3A is a photograph of an original image;

FIG 3B is a photograph illustrating red, green and blue components of the original image shown in FIG 3A being entirely compressed;

FIG 3C is a photograph illustrating a red component of the original image shown in FIG 3A being compressed;

FIG 3D is a photograph illustrating a green component of the original image shown in FIG. 3A being compressed;

FIG. 3E is a photograph illustrating a blue component of the original image shown in FIG 3A being compressed;

FIG 4 is a view of an exemplary mapping table based on a human color perception characteristic according to an exemplary embodiment of the present invention;

FIG 5 is a block diagram of an exemplary mobile terminal according to an exemplary embodiment of the present invention;

FIG 6 is a flowchart illustrating an exemplary method of displaying a color image information using a mapping table based on a human color perception characteristic according to an exemplary embodiment of the present invention; and

FIG 7 is a flowchart illustrating an exemplary method of displaying color image information on a display using a mapping table based on a human color perception characteristic in a mobile terminal with a color sensor according to another exemplary embodiment of the present invention.

Throughout the drawings, the same or similar elements are denoted by the same reference numerals.

**DETAILED DESCRIPTION OF EXEMPLARY EMBODIMENTS**

Reference will now be made in detail to exemplary embodiments of the present invention, examples of which are illustrated in the accompanying drawings. A detailed description of well-known features will be omitted for conciseness.

A method of displaying color image and a display using the same according to the exemplary embodiments of the present invention can be applied to all types of mobile terminals having a conventional display. However, for convenience of explanation, a mobile terminal with a Liquid Crystal Display (LCD) as a display will be exemplarily described below.

Humans perceive color based on light intensity arriving at visual cells of their eyes. Human color perception can be expressed with quantitative values by various means.

A representative method is a red green blue (RGB) format for expressing human color perception with RGB values of color components. The color can be expressed using combinations of the RGB colors, and humans perceive a particular color of an object according to the combination of the RGB colors.

Another method is a YUV format that is derived from the fact that human eyes are more sensitive to luminance than chrominance. The YUV format divides a color into a Y component (luminance or brightness) and U and V components (chrominance). Like the RGB format, the YUV format is used to express a particular color of an object.

The relationship between the YUV format and the RGB format can be expressed as Equation 2 below:

$$Y = 0.3R + 0.59G + 0.11B$$

$$U = (B-Y) \times 0.493$$

$$V = (R-Y) \times 0.877 \hspace{4cm} \text{Equation 2}$$

Because human eyes are more sensitive to brightness than chrominance, the color is expressed with a 4:2:2 YUV format, instead of a 1:1:1 YUV format. That is, the Y component is weighed more than the U and V components.

In the calculation of the Y component in Equation 2, coefficients of the RGB values are different from one another. This is because human visual cells are sensitive to the color green. That is, the Y component is calculated using the human color perception characteristic.

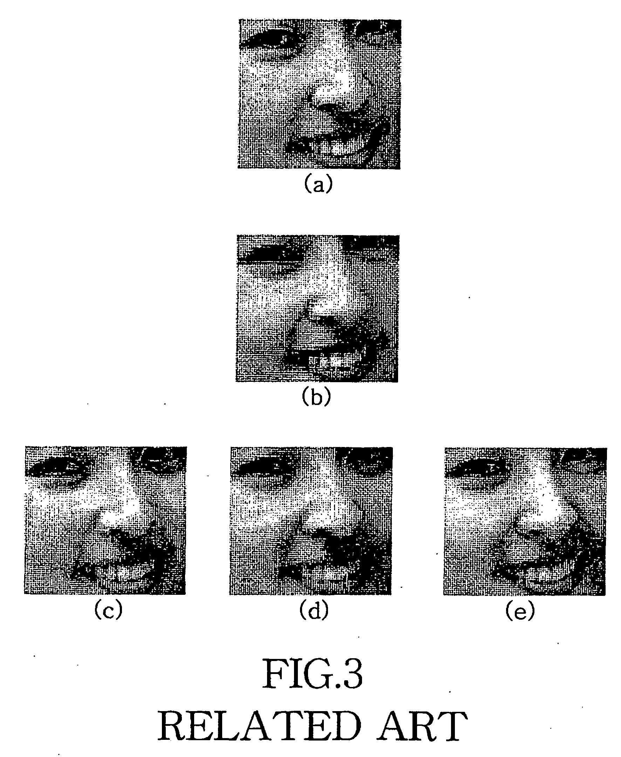

In Equation 2 used for the RGB to YUV conversion, the ratio of the coefficients of the R, G and B components is 3:6:1. That is, color information that is less sensitive to the human eye is compressed within a range where humans cannot perceive it. In this manner, sensitivity of each color is determined. A description about that will be described below with reference to FIG 3.

FIG 3A is a photograph of an original image. FIG 3B is a photograph illustrating R, G and B components of the original image being entirely compressed; FIG 3C is a photograph illustrating a R component of the original image being compressed; FIG. 3D is a photograph illustrating a G component of the original image being compressed; and FIG 3E is a photograph illustrating a B component of the original image being compressed.

More specifically, FIG 3B is an image given when all RGB components of the original image are compressed at a block size of 10; FIG 3C is an image given when only the R component of the original image is compressed at a block size of 10; FIG 3D is an image given when only the G component is compressed at a block size of 10; and FIG 3E is an image given when only the B component is compressed at a block size of 10.

Referring to FIGs. 3C to 3E, the image shown in FIG 3D is most distorted, while the image shown in FIG 3E is least distorted.

As can be seen from Equation 2 and FIG 3, human visual cells are sensitive to G, R and B components in this order and the sensitivity ratio is R:G:B=3:6:1, just like the coefficient ratio of R, G and B components in the calculation of the Y component.

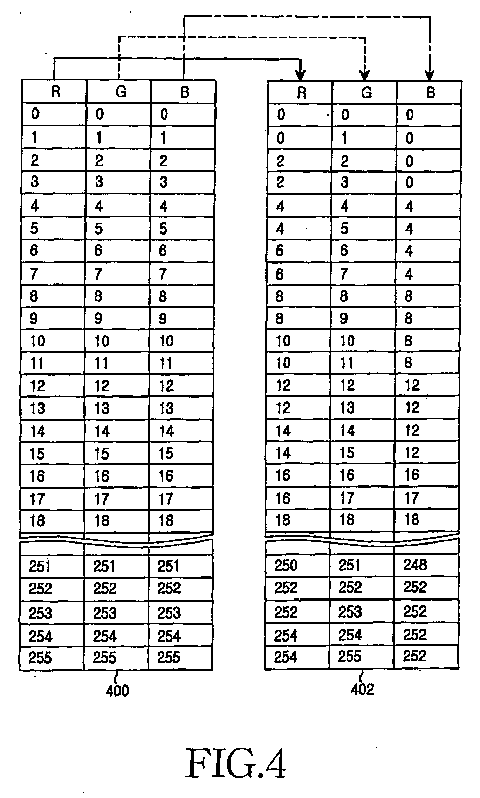

FIG 4 is a view of a mapping table based on an exemplary human color perception characteristic according to an exemplary embodiment of the present invention. In FIG 4, a reference numeral 400 represents a mapping table where respective RGB components are expressed in a range from 0 to 255 (8 bits for each RGB component) and a reference numeral 402 represents a table where R, G and B components are respectively mapped with 7 bits, 8 bits and 6 bits. That is, the mapping table 400 is mapped into the mapping table 402.

Referring to FIG 4, in the creation of the Gamut mapping table, the ratio of the RGB components according to a human color perception characteristic is about 3:6:1 in the transformation of the RGB format into the YUV format, as shown in Equation 1 above. That is, 8 bits are allocated to the G component without any change in size of the original data. Also, 7 bits and 6 bits are allocated to the R component and the B component, respectively. Those bit allocations are performed based on the fact that human visual cells are most sensitive to the G component when the same amount of data changes. In addition, the R component is more sensitive than the B component and less sensitive than the G component.

According to an exemplary embodiment of the present invention, the Gamut mapping table is created based on the human color perception characteristic. Of course, inherent characteristics of the display of the mobile terminal must also be considered. Therefore, the respective R, G and B components in the Gamut mapping table may take up 7 bits, 8 bits and 6 bits ($128 \times 256 \times 64$), or may take up 6 bits, 8 bits and 6 bits ($64 \times 256 \times 64$), depending on the capabilities of the mobile terminal display. In the two cases, the size of the mapping table is about 2 million and about 1 million, respectively. That is, compared with the conventional Gamut mapping table being 16 million in size, both of the Gamut mapping tables according to an exemplary embodiment of the present invention are substantively reduced.

Therefore, the color image can be represented accurately using a small-capacity memory. That is, a large gain in view of hardware can be obtained without any impact on the region where humans perceive color.

A structure of a mobile terminal according to an exemplary embodiment of the present invention will now be described with the accompanying drawings.

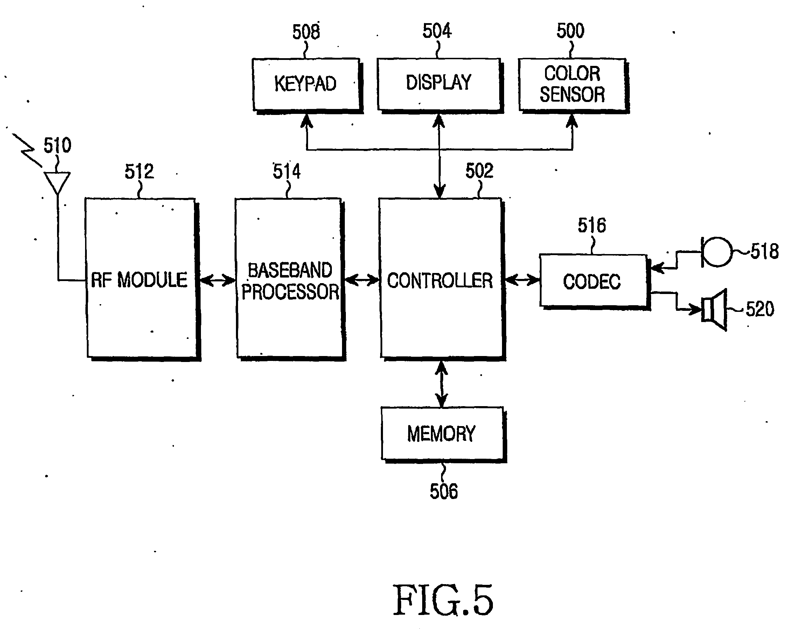

FIG 5 is a block diagram of a mobile terminal according to an exemplary embodiment of the present invention. Referring to FIG 5, the mobile terminal comprises a color sensor 500, a controller 502, a display 504, a memory 506, a keypad assembly 508, an antenna 510, a Radio Frequency (RF) module 512, a baseband processor 514, a codec 516, a microphone 518, and a speaker 520.

The color sensor 500 is an optional unit. Specifically, the color sensor 500 measures a quantity of light and color information of the surroundings and discerns three primary lights (R, G and B) using a difference of intrinsic wavelengths thereof, and then outputs corresponding quantities as analog or digital values to the controller 502.

The memory 506 stores a program for controlling an overall operation of the mobile terminal. Also, the memory 506 stores a mapping table that determines a ratio of RGB color information using a color representation method of dividing the information of the original color image into luminance component and chrominance components. That is, the memory 506 stores a YUV-based mapping table based on the human color perception characteristic. In addition, if the color sensor 500 is provided in the mobile terminal, the memory 506 may store a YUV-based color sensor mapping table created based on the human color perception characteristic.

When the color sensor 500 is provided, the controller 502 maps each RGB value of the original color image according to the mapping table stored in the memory 506 based on the information of colors input through the color sensor 500. In this manner, an optimum image is provided to the user through the display 504.

The display 504 visually displays several signals and color information, which are output from the controller 502. A Liquid Crystal Display (LCD) may be used as the display 504.

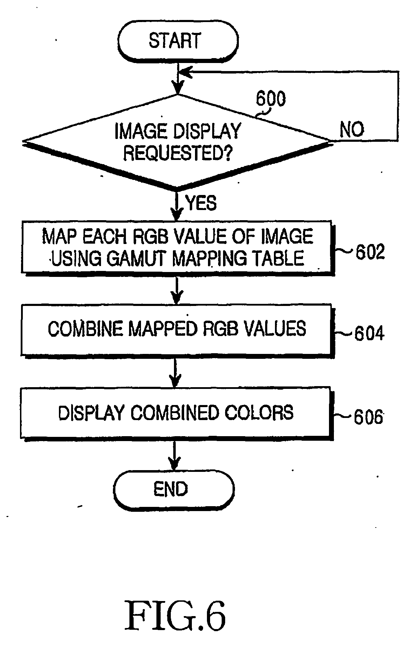

FIG 6 is a flowchart illustrating an exemplary method of displaying a color image data (information) using a Gamut mapping table based on human color perception characteristic according to an exemplary embodiment of the present invention.

In step 600, the controller 502 determines whether there is a request for displaying an image on the display 504 of the mobile terminal. In step 602, if the image display is requested, the controller 502 maps each RGB value of the image using the Gamut mapping table stored in the memory 506. For example, when 7 bits, 8 bits and 6 bits (128×256×64) are respectively allocated to the R, G and B components, the size of the Gamut mapping table is about 2 M.

In step 604, the controller 502 combines the RGB values that are mapped using the Gamut mapping table. In step 606, the controller 502 allows the combined values to be displayed on the display 504. Accordingly, using the small-sized Gamut mapping table, the color image can be provided to the user without any change of the color information that human perceives.

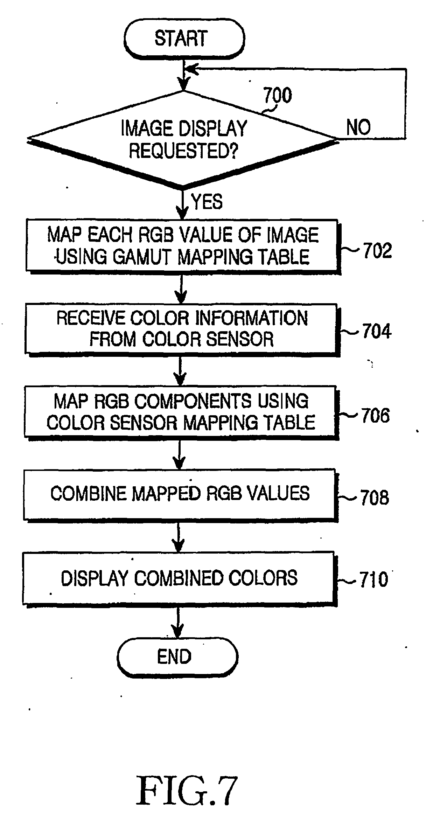

FIG 7 is a flowchart illustrating an exemplary method of displaying color image information on a display by using a color sensor mapping table and a Gamut mapping table based on human color perception characteristic in a mobile terminal with a color sensor according to another exemplary embodiment of the present invention. That is, in FIG 7, the controller 502 transforms the color information of the original image depending on adjacent color information, and displays the transformed color information on the display 504.

In this embodiment, it is necessary to measure the adjacent color information and the change in quantity of light considering the surroundings and to display the original image based on this change. Such a method and apparatus is disclosed in Korean Patent Application No. 2004-0065819, entitled "APPARATUS AND METHOD OF OPTMZING COLOR COMBINATION OF DISPLAY ACCORDING TO EXTERNAL LIGHTING CONDITION", the entire contents of which are hereby incorporated by reference.

Accordingly, an additional mapping table is required for displaying color image based on the change in surroundings. This mapping table will be referred to as a color sensor mapping table. The compression method of the Gamut mapping table can also be applied to the additional mapping table.

Referring to FIG. 7, in step 700, the controller 502 checks whether there is a request for displaying an image on the display 504 of the mobile terminal. In step 702, if the image display is requested, the controller 502 maps each RGB value of the image using the Gamut mapping table stored in the memory 506. For example, when 7 bits, 8 bits and 6 bits (128 ×256×64) are respectively allocated to the R, G and B components, the size of the Gamut mapping table is about 2 M.

In step 704, the controller 502 receives R, G and B color information from the color sensor 500. In step 706, the controller 502 maps the RGB components using the color sensor mapping table where 7 bits, 8 bits and 6 bits (128 × 256 × 64) are respectively allocated to R, G and B components, considering the surroundings based on the color information.

In step 708, the controller 502 combines R, G and B values output by the color sensor mapping table. In step 710, the controller 502 outputs the combined results to the display 504 such that the desired image is provided to the user.

As described above, using the improved mapping table based on the human color perception characteristic, color image data (information) is displayed on the display. Therefore, the color image can be displayed using the small-sized mapping table without any change of the color information that humans see.

Further, even when color image information increase, the color image can be displayed without any increase in memory size, thereby increasing memory utility of the mobile terminal.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

**1.** A mobile terminal comprising:

a memory for storing a mapping table that predetermines a ratio of red, green and blue (R, G and B) components of an original color image, based on a human color perception characteristic that humans are more sensitive to the G component among the R, G and B components;

a controller for mapping the original color image into corresponding R, G and B components of the mapping table, and for combining the mapped R, G and B components; and
a display for displaying the combined R, G and B components.

2.  The mobile terminal of claim 1, wherein the ratio of the R, G and B components in the mapping table is 3:6:1.

3.  The mobile terminal of claim 1, wherein 7 bits, 8 bits and 6 bits are respectively allocated to the R, G and B components in the mapping table.

4.  The mobile terminal of claim 1, wherein 6 bits, 8 bits and 6 bits are respectively allocated to the R, G and B components in the mapping table.

5.  The mobile terminal of claim 1, wherein the mapping table is a Gamut mapping table.

6.  The mobile terminal of claim 1, wherein the display comprises a liquid crystal display.

7.  A mobile terminal comprising:

a color sensor for measuring color information of surroundings and a quantity of light;
a memory for storing a mapping table and a color sensor mapping table, the mapping table being configured to predetermine a ratio of red, green and blue (R, G and B) components of an original color image based on a human color perception characteristic that humans are more sensitive to the G component among the R, G and B components, the color sensor mapping table being configured to predetermine a ratio of R, G and B components of the mapped information according to the color information of the surroundings and the information on the quantity of light output from the color sensor, based on the human color perception characteristic;
a controller for mapping the original color image into corresponding R, G and B components of the mapping table, and for mapping the mapped R, G and B components into corresponding R, G and B components of the color sensor mapping table, and for combining the respective mapped R, G and B components; and
a display for displaying the combined R, G and B components.

8.  The mobile terminal of claim 7, wherein the ratio of the R, G and B components in the mapping table or the color sensor mapping table is 3:6:1.

9.  The mobile terminal of claim 7, wherein 7 bits, 8 bits and 6 bits are respectively allocated to the R, G and B components in the mapping table or the color sensor mapping table.

10. The mobile terminal of claim 7, wherein 6 bits, 8 bits and 6 bits are respectively allocated to the R, G and B components in the mapping table or the color sensor mapping table.

11. The mobile terminal of claim 7, wherein the mapping table is a Gamut mapping table.

12. The mobile terminal of claim 7, wherein the display comprises a liquid crystal display.

13. A method of displaying a color image in a mobile terminal, the method comprising the steps of:

setting a mapping table that predetermines a ratio of red, green and blue (R, G and B) components of an original color image, based on a human color perception characteristic that humans are more sensitive to the G component among the R, G and B components;
mapping the original color image into corresponding R, G and B components of the mapping table, and combining the mapped R, G and B components; and
displaying the combined R, G and B components.

14. The method of claim 13, wherein the ratio of the R, G and B components in the mapping table is 3:6:1.

15. The method of claim 13, wherein 7 bits, 8 bits and 6 bits are respectively allocated to the R, G and B components in the mapping table.

16. The method of claim 13, wherein 6 bits, 8 bits and 6 bits are respectively allocated to the R, G and B components in the mapping table.

**17.** A method of displaying a color image in a mobile terminal, the method comprising the steps of:

measuring color information of surroundings and a quantity of light;
setting a mapping table that predetermines a ratio of red, green and blue (R, G and B) components of an original color image based on a human color perception characteristic that humans are more sensitive to the G component among the R, G and B components;
setting a color sensor mapping table that predetermines a ratio of R, G and B components of the mapped information according to the color information of the surroundings and the information on the quantity of light output from the color sensor, based on the human color perception characteristic;
mapping the original color image into corresponding R, G and B components of the mapping table, mapping the mapped R, G and B components into corresponding R, G and B components of the color sensor mapping table, and combining the respective mapped R, G and B components; and
displaying the combined R, G and B components.

**18.** The method of claim 17, wherein the ratio of the R, G and B components in the mapping table or the color sensor mapping table is 3:6:1.

**19.** The method of claim 17, wherein 7 bits, 8 bits and 6 bits are respectively allocated to the R, G and B components in the mapping table or the color sensor mapping table.

**20.** The method of claim 17, wherein 6 bits, 8 bits and 6 bits are respectively allocated to the R, G and B components in the mapping table or the color sensor mapping table.

# FIG.1
# PRIOR ART

200

| | | |
|---|---|---|
| 0 | 0 | 0 |
| 51 | 0 | 0 |
| 102 | 0 | 0 |
| 153 | 0 | 0 |
| 204 | 0 | 0 |
| 255 | 0 | 0 |
| 0 | 51 | 0 |
| 51 | 51 | 0 |
| 102 | 51 | 0 |
| 153 | 51 | 0 |
| 204 | 51 | 0 |
| 255 | 51 | 0 |
| 0 | 102 | 0 |
| 51 | 102 | 0 |
| 102 | 102 | 0 |
| 153 | 102 | 0 |
| 204 | 102 | 0 |
| 255 | 102 | 0 |
| 0 | 153 | 0 |
| 51 | 153 | 0 |
| 102 | 153 | 0 |
| 153 | 153 | 0 |
| 204 | 153 | 0 |
| 255 | 153 | 0 |
| 0 | 204 | 0 |
| 51 | 204 | 0 |
| 102 | 204 | 0 |
| 153 | 204 | 0 |
| 204 | 204 | 0 |
| 255 | 204 | 0 |
| 0 | 255 | 0 |
| 51 | 255 | 0 |
| 102 | 255 | 0 |
| 153 | 255 | 0 |
| 204 | 255 | 0 |
| 255 | 255 | 0 |

204

202

| | | |
|---|---|---|
| 0 | 0 | 0 |
| 32 | 7 | 0 |
| 74 | 21 | 0 |
| 115 | 30 | 0 |
| 154 | 47 | 0 |
| 231 | 55 | 0 |
| 5 | 52 | 0 |
| 39 | 53 | 0 |
| 79 | 56 | 0 |
| 117 | 62 | 0 |
| 158 | 68 | 0 |
| 231 | 74 | 0 |
| 0 | 97 | 0 |
| 40 | 97 | 0 |
| 78 | 98 | 0 |
| 118 | 100 | 0 |
| 164 | 105 | 0 |
| 234 | 109 | 0 |
| 0 | 148 | 0 |
| 23 | 150 | 0 |
| 73 | 149 | 0 |
| 115 | 148 | 0 |
| 165 | 154 | 0 |
| 234 | 155 | 0 |
| 0 | 225 | 43 |
| 0 | 229 | 22 |
| 56 | 229 | 0 |
| 105 | 227 | 0 |
| 150 | 227 | 0 |
| 230 | 232 | 0 |
| 71 | 255 | 98 |
| 76 | 254 | 95 |
| 97 | 255 | 93 |
| 127 | 255 | 101 |
| 164 | 255 | 108 |
| 221 | 255 | 117 |

206

# FIG.2
# PRIOR ART

(a)

(b)

(c)          (d)          (e)

FIG.3
RELATED ART

| R | G | B |
|---|---|---|
| 0 | 0 | 0 |
| 1 | 1 | 1 |
| 2 | 2 | 2 |
| 3 | 3 | 3 |
| 4 | 4 | 4 |
| 5 | 5 | 5 |
| 6 | 6 | 6 |
| 7 | 7 | 7 |
| 8 | 8 | 8 |
| 9 | 9 | 9 |
| 10 | 10 | 10 |
| 11 | 11 | 11 |
| 12 | 12 | 12 |
| 13 | 13 | 13 |
| 14 | 14 | 14 |
| 15 | 15 | 15 |
| 16 | 16 | 16 |
| 17 | 17 | 17 |
| 18 | 18 | 18 |
| 251 | 251 | 251 |
| 252 | 252 | 252 |
| 253 | 253 | 253 |
| 254 | 254 | 254 |
| 255 | 255 | 255 |

400

| R | G | B |
|---|---|---|
| 0 | 0 | 0 |
| 0 | 1 | 0 |
| 2 | 2 | 0 |
| 2 | 3 | 0 |
| 4 | 4 | 4 |
| 4 | 5 | 4 |
| 6 | 6 | 4 |
| 6 | 7 | 4 |
| 8 | 8 | 8 |
| 8 | 9 | 8 |
| 10 | 10 | 8 |
| 10 | 11 | 8 |
| 12 | 12 | 12 |
| 12 | 13 | 12 |
| 14 | 14 | 12 |
| 14 | 15 | 12 |
| 16 | 16 | 16 |
| 16 | 17 | 17 |
| 18 | 18 | 18 |
| 250 | 251 | 248 |
| 252 | 252 | 252 |
| 252 | 253 | 252 |
| 254 | 254 | 252 |
| 254 | 255 | 252 |

402

# FIG.4

FIG.5

START

600

IMAGE DISPLAY
REQUESTED?

NO

YES

MAP EACH RGB VALUE OF IMAGE
USING GAMUT MAPPING TABLE ~602

COMBINE MAPPED RGB VALUES ~604

DISPLAY COMBINED COLORS ~606

END

FIG.6

START

IMAGE DISPLAY
REQUESTED? ~700

NO

YES

MAP EACH RGB VALUE OF IMAGE
USING GAMUT MAPPING TABLE ~702

RECEIVE COLOR INFORMATION
FROM COLOR SENSOR ~704

MAP RGB COMPONENTS USING
COLOR SENSOR MAPPING TABLE ~706

COMBINE MAPPED RGB VALUES ~708

DISPLAY COMBINED COLORS ~710

END

FIG.7